# EUROPÄISCHE PATENTANMELDUNG

(11) **EP 0 710 801 A1**
(43) Veröffentlichungstag der Anmeldung: **08.05.1996**
(21) Anmeldenummer: 95115500.1
(22) Anmeldetag: 30.09.1995
(51) Int. Cl.: F24D 3/14, F24D 5/10

(54) **Wandelement**

(30) Priorität: 02.11.1994 DE 4438843
(71) Anmelder: Vahlbrauk, Karl Heinz, D-37581 Bad Gandersheim (DE)
(72) Erfinder: Vahlbrauk, Karl Heinz, D-37581 Bad Gandersheim (DE)
(74) Vertreter: Sobisch, Peter, Dipl.-Ing.

(57) **Zusammenfassung**

Ein gleichzeitig zur Klimatisierung von Räumen nutzbares Wandelement besteht aus einer Nebeneinanderanordnung von aus Geopolymer-Schaumwerkstoff bestehenden, im Querschnitt U-förmigen Bauelementen (1), die über ihre Seitenflächen (2) stofflich homogen miteinander verklebt sind, und zwar derart, daß ein Teil der U-förmigen Ausnehmungen (3) zur Vorderseite (4) und ein anderer Teil dieser Ausnehmungen (3) zur Rückseite (5) hin orientiert ist. Die Ausnehmungen (3) bilden ein geschlossenes Leitungsnetzwerk und werden im Querschnitt zur Vorderseite (4) bzw. zur Rückseite (5) dichtend durch Platten (6, 7) verschlossen, die aus einem Werkstoff von hoher Wärmeleitfähigkeit, insbesondere einem Metall bestehen. Über die außenliegenden Ausnehmungen (3) kann auf diese Weise Solarenergie gewonnen und über das Wärmeträgermedium (3) in die, zur Rückseite (5) hin orientierten Ausnehmungen (3) übertragen oder in sonstiger Weise einer Nutzung zugeführt werden. Das gesamte Wandelement besteht ausschließlich aus anorganischen Werkstoffen und ist unbrennbar.

## Beschreibung

Die Erfindung bezieht sich auf ein Wandelement entsprechend dem Oberbegriff des Anspruchs 1.

Im Rahmen der industriellen Vorfertigung von Bauelementen des Hochbaus sind Wandelemente bekannt, bei denen die Funktionen der Baustatik und der Wärme- und Schalldämmung zusammengefaßt sind. Auf diese Weise werden Montagekosten vermindert, die ansonsten aus der nachträglichen Anbringung von Wärmedämmschichten an Außenwandungen entstehen. In diesem Zusammenhang sind Wandelemente bekannt, die aus langgestreckten stabförmigen, seitlich aneinandergesetzten Bauelementen bestehen, die zur Außenseite hin offene, sich in deren Längsrichtung erstreckende, im Querschnitt U-förmige Ausnehmungen aufweisen. Die Bauelemente bestehen teilweise aus einem anorganischen Schaumwerkstoff, z.B. einem GeopolymerWerkstoff, aus Gasbeton oder Zellkeramik und teilweise aus Beton. Die genannten Ausnehmungen können zur Variierung der baustatischen Tragfähigkeit des Wandelements mit Beton, gegebenenfalls in armierter Form ausgefüllt werden, so daß entsprechend dem Anteil an aus Schaumwerkstoffen bestehenden Bauelementen sowohl die baustatischen als auch die wärmedämmtechnischen Eigenschaften eines solchen Wandelements in einfacher Weise variierbar sind. Von Vorteil bei einem solchen Wandelement ist, daß dieses gänzlich aus anorganischen Werkstoffen besteht und somit im Brandfall keine Gefahrenquelle bilden kann.

Es ist die Aufgabe der Erfindung, ein Wandelement der eingangs bezeichneten Art mit Hinblick auf eine weitergehendere Integration von bautechnischen Funktionen hin auszugestalten. Gelöst ist diese Aufgabe bei einem solchen Wandelement durch die Merkmale des Kennzeichnungsteils des Anspruchs 1.

Erfindungswesentlich ist hiernach, daß die, in den Bauelementen vorhandenen Querschnittsprofile durch Platten dichtend verschlossen sind, die aus einem Werkstoff von hoher Wärmeleitfähigkeit bestehen und daß - bezogen auf das gesamte Wandelement - die genannten Querschnittsprofile teils zu dessen Vorderseite und teils zu dessen Rückseite hin orientiert sind. Die Querschnittsprofile, insbesondere die durch diese definierten Ausnehmungen, die sich in Längsrichtung des einzelnen Bauelements erstrecken, bilden erfindungsgemäß wenigstens ein zusammenhängendes Leitungsnetzwerk, innerhalb welchem ein flüssiges oder gasförmiges Medium geführt wird. Nachdem die Bauelemente als solche aus einem anorganischen Schaumwerkstoff bestehen, die Platten hingegen eine hohe Wärmeleitfähigkeit aufweisen und beispielsweise aus einem Metall bestehen, besteht ein Wärmeaustausch mit der Umgebung nur über die genannten Platten, nicht hingegen über die Bauelemente als solche. Ein Wärmeaustausch zwischen benachbarten Querschnittsprofilen über die Struktur der Bauelemente wird gleichermaßen unterbunden. Das genannte Leitungsnetzwerk kann in vielfältiger Weise für Zwecke der Raumklimatisierung benutzt werden. So besteht die Möglichkeit, das flächendeckende Leitungsnetzwerk als großflächigen Heizkörper zu benutzen, beispielsweise im Rahmen von Wand- oder auch Fußbodenheizungen. Eine weitere Möglichkeit besteht darin, ein solches Wandelement im Rahmen von Außenwandungen oder auch Dächern zu verwenden, wobei das, der Außenseite zugekehrte Leitungsnetzwerk über die dortigen Platten zur Einbindung von Solarenergie benutzt wird, welche über die Platten auf ein innerhalb der Querschnittsprofile strömendes Wärmeträgermedium übertragen und innerhalb des Gebäudes einer weiteren Verwendung zugeführt wird, beispielsweise in Verbindung mit einer Wärmepumpenanlage, zur Warmwasserbereitung oder in sonstiger Weise zur Raumtemperierung. Zur Verbesserung der Absorption von Wärmestrahlung können in diesem Fall die außenseitigen Platten dunkel eingefärbt sein. Gleichzeitig besteht die Möglichkeit, über das innenseitige Leitungsnetzwerk dem Innenraum Wärme zu entziehen und über das innerhalb des Leitungsnetzwerks strömende Wärmeträgermedium abzuführen. Eine weitere Verwendungsmöglichkeit besteht darin, das Leitungsnetzwerk in Verbindung mit Ein- und Ausströmöffnungen auf der Innen- und Außenseite des Wandelements für Zwecke der Be- und Entlüftung zu nutzen. Erfindungswesentlich ist in jedem Fall, daß die Leitungsnetzwerke der Vorder- und der Rückseite des Wandelements thermisch voneinander getrennt sind und über die genannten Platten nur mit der jeweiligen Außenseite bzw. Innenseite des Wandelements in einen Wärmeaustausch, sei es durch Strahlung, sei es durch Konvektion, treten. Die Nutzung dieser beiden Leitungsnetzwerke kann bauseitig in einfachster Weise variiert werden und es können insbesondere diese Leitungsnetzwerke auch völlig getrennt voneinander einer Nutzung im Rahmen von Anlagen und Systemen der Raumklimatisierung zugeführt werden.

Gemäß den Merkmalen des Anspruchs 2 bestehen die Bauelemente aus einem Geopolymer-Schaumwerkstoff und sind stofflich homogen miteinander verklebt. Als Klebstoff wird somit wiederum ein Geopolymer-Werkstoff verwendet. Dieser Werkstoff eröffnet besonders einfache Möglichkeiten der Weiterverarbeitung, insbesondere zwecks Bildung der eingangs bezeichneten Leitungsnetzwerke. So können die Wandungen der Bauelemente in einfacher Weise zwecks Bildung oder Veränderung eines solchen Leitungsnetzwerks aufgebohrt werden oder es können vorhandene Bohrungen durch Einsetzen eines stoffgleichen Verschlußkörpers auch wieder geschlossen werden. Dieser Werkstoff zeichnet sich im übrigen durch eine hohe Widerstandsfähigkeit auf und entspricht in seinen übrigen Eigenschaften weitestgehend keramischen Werkstoffen.

Die Merkmale der Ansprüche 3 bis 5 sind auf die geometrische Ausgestaltung der Bauelemente gerichtet. Diese weisen hiernach vorzugsweise eine rechteckige oder quadratische Außenkontur auf, da sich diese Konturen im Rahmen von Wandungen zwecks Bildung ebenener Vorder- und Rückseiten einfach zusammenfügen lassen. Es kommen jedoch auch dreieckige oder trapezförmige Außenkonturen in Betracht, welche unter anderen zur Bildung von polygonartig gekrümmten Wandungselementen zweckmäßig sind. Letztgenannte Bauelemente können wiederum über stabförmige Zwischenelemente zu quadratischen oder rechteckigen Baugruppen geometrisch komplettiert werden, so daß auf diese Weise die Möglichkeit besteht, die Querschnittsformen der sich in Längsrichtung der Bauelemente erstreckenden Ausnehmungen zu variieren. In jedem Fall sind auch die Zwischenelemente werkstoffgleich mit den Bauelementen ausgebildet, so daß sich wiederum eine werkstofflich völlig homogene Wandungsstruktur ergibt.

Gemäß den Merkmalen des Anspruchs 6 können die Bauelemente und die Zwischenelemente jeweils eine unterschiedliche Dichte aufweisen. Da über die Dichte einerseits die baustatischen, andererseits jedoch auch die wärmedämmtechnischen Eigenschaften eines Bauelements beeinflußbar sind, können auf diese Weise die diesbezüglichen Eigenschaften des Wandungselements variiert werden und den Anforderungen des jeweiligen Einzelfalls angepaßt werden.

Die Merkmale der Ansprüche 7 und 8 sind auf die flächige Erstreckung der genannten Platten gerichtet. Diese stehen auf jeden Fall lösbar mit den Bauelementen in Verbindung. Ihre wesentliche Funktion besteht darin, den thermischen Kontakt bzw. die thermische Wechselwirkung zwischen der Umgebung und dem, innerhalb der Ausnehmungen strömenden Wärmeträgermedium zu vermitteln. Insbesondere dann, wenn die Platten jeweils mehrere Querschnittsprofile gleichzeitig überdecken, ergibt sich die Möglichkeit, große homogene, wärmeabstrahlende bzw. wärmeabsorbierende Flächen bereitzustellen.

Die Merkmale des Anspruchs 9 dienen der Verbesserung des Wärmeaustauschs mit der Umgebung, insbesondere der Verbesserung der Absorption von Wärmestrahlung. Zusätzlich können die metallischen Außenflächen der Platten dunkel eingefärbt sein.

Die Bauelemente können - gegebenenfalls in Verbindung mit den bereits genannten Zwischenelementen zur Bildung vorder- und rückseitig ebener Wandungselemente hin ausgestaltet sein. Grundsätzlich können die Bauelemente jedoch auch vorder- und rückseitig gekrümmte Flächen aufweisen, so daß sich durch seitliches Aneinandersetzen derartiger Bauelemente auch gekrümmte Wandungselemente, beispielsweise mit einer zylindrischen Gestalt herstellen lassen.

Die erfindungsgemäßen Wandelemente können entsprechend den Merkmalen des Anspruchs 11 an beliebiger Stelle im Rahmen der Baustruktur Verwendung finden, vorzugsweise findet eine Verwendung jedoch im Rahmen von Außenwandungen und Dächern statt, da eine wesentliche Verwendungsmöglichkeit dieser Wandelemente stets dann gegeben ist, wenn es um die Absorption von Sonnenstrahlung geht.

Man erkennt aus obigen Ausführungen, daß in dem erfindungsgemäßen Wandungselement die Funktionen der Baustatik, der Wärme- und Schalldämmung und zum Teil der Klimatisierung in besonders vorteilhafter Weise zusammengefaßt sind. Das Wandelement besteht vollständig aus anorganischen Werkstoffen und ist damit unbrennbar. Es zeichnet sich darüber hinaus - sieht man von den genannten Platten einmal ab - durch völlige werkstoffliche Homogenität aus.

Die Erfindung wird im folgenden unter Bezugnahme auf die in den Zeichnungen dargestellten Ausführungsbeispiele näher erläutert werden. Es zeigen:
Fig. 1 eine Querschnittsdarstellung eines ersten Ausführungsbeispiels;
Fig. 2 eine Querschnittsdarstellung eines zweiten Ausführungsbeispiels.

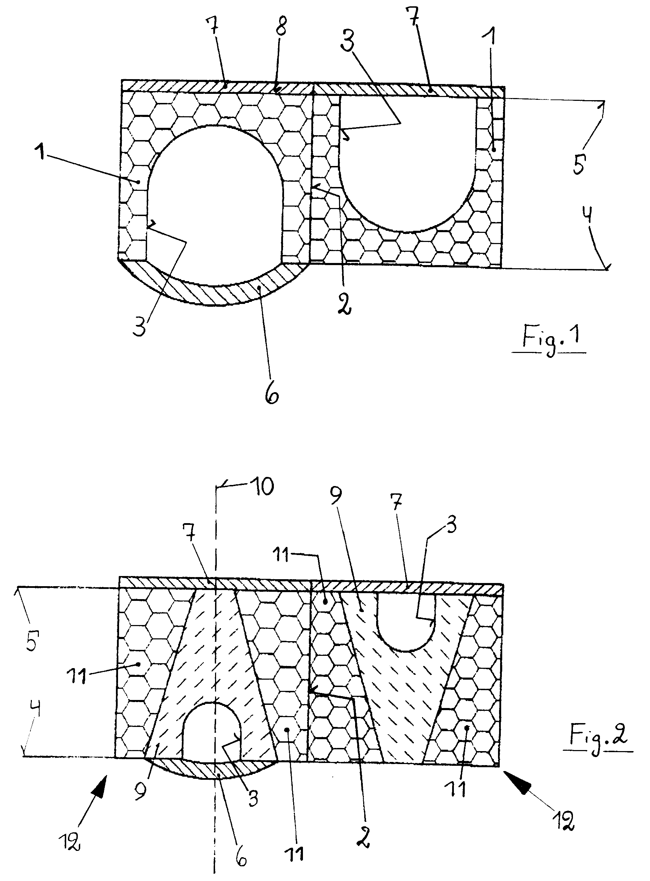

Mit 1 sind in Fig. 1 jeweils langgestreckte, im Querschnitt U-förmig ausgebildete, zu einer Seite hin somit offene stabartige Bauelemente bezeichnet, die aus einem anorganischen Schaumwerkstoff, hier einem Geopolymer-Schaumwerkstoff bestehen. Die geometrisch untereinander gleichen Bauelemente 1 stehen über ihre Seitenflächen 2 miteinander in einer Klebeverbindung, und zwar derart, daß der eine Teil der U-förmigen Ausnehmungen 3 zu einer Vorderseite 4 und der andere Teil zu einer Rückseite 5 hin orientiert ist.

Die Klebeverbindung erfolgt unter Verwendung eines dem Werkstoff der Bauelemente 1 stofflich gleichen Klebstoffs, so daß aus der Nebeneinanderanordnung der Vielzahl derartiger Bauelemente 1 ein komplettes Wandungselement darstellbar ist. Bei diesem Wandungselement kann es sich um eine Außenwandung, eine Decke bzw. einen Boden, jedoch auch um eine Dachfläche handeln, wobei die Vorderseite 4 die Außenseite und die Rückseite 5 die Innenseite bildet.

Mit 6 ist eine Platte bezeichnet, welche die Ausnehmung 3 des, zur Vorderseite 4 hin orientierten und eine konvexe, beispielsweise zylindrisch gekrümmte Gestalt aufweisen kann. Die Platte 6 steht mit dem zugeordneten Bauelement 1 in lösbarer Verbindung und bildet im übrigen einen dichtenden Abschluß des Querschnittsprofils der zugeordneten Ausnehmung 3.

Mit 7 sind ebene Platten bezeichnet, welche in gleicher Weise die Ausnehmungen 3 der Bauelemente 1 dichtend verschließen, die zur Rückseite 5 hin orientiert sind.

In gleicher Weise können auch die Grundseiten 8 der Bauelemente 1 mit Platten 7 belegt sein, deren Ausnehmungen 3 zur Vorderseite 4 hin orientiert sind, so daß sich in der Ebene der Rückseite 5 eine geschlossene, durch die Platten 7 gebildete Beschichtung des Wandungselements ergibt. Die Platten 6, 7 bestehen aus einem Werkstoff von hoher Wärmeleitfähigkeit, z.B. einem Metall.

Im Rahmen eines Wandungselements können aneinandergrenzende Bauelemente 1 - wie in Fig. 1 gezeigt - in abwechselnder Folge eine bezüglich der Vorder- bzw. Rückseite 4, 5 jeweils abwechselnde Orientierung aufweisen. Es ist jedoch auch eine von dieser gleichförmigen Verteilung abweichende Verteilung der Orientierung der einzelnen Bauelemente 1 möglich. Die Ausnehmungen 3 bilden ein zusammenhängendes, die Ebene des Wandungselements gleichmäßig überdeckendes Leitungsnetzwerk für ein gasförmiges oder ein flüssiges Wärmeträgermedium, wobei über die, zur Vorderseite 4 hin orientierten Ausnehmungen Solarenergie über die Platten 6 absorbiert und auf das Wärmeträgermedium übertragen wird und wobei über die, zur Rückseite 5 hin orientierten Platten 7 Wärme des Wärmeträgermediums abgestrahlt wird.

Aufgrund der Ausbildung der Bauelemente 1 aus einem anorganischen Schaumwerkstoff findet eine Wärmeübertragung über die Wandungen des Bauelements praktisch nicht statt, so daß das einzelne Bauelement 1 praktisch nur über die zugekehrten Platten 6, 7 bezüglich einer Wärmeübertragung in Wechselwirkung mit der jeweiligen Umgebung tritt. Eine Wärmeübertragung über Teile der jeweils U-förmig gestalteten Bauelemente 1 findet im übrigen somit nicht statt.

Bei dem Ausführungsbeispiel gemäß Fig. 2 sind Funktionselemente, die mit denjenigen gemäß Fig. 1 übereinstimmen, entsprechend beziffert, so daß auf eine diesbezügliche wiederholte Beschreibung verzichtet werden kann.

Wesensmerkmal des in Fig. 2 gezeigten Ausführungsbeispiels ist, daß anstelle der U-förmigen Bauelemente 1 nunmehr trapezförmige Bauelemente 9 eingesetzt werden, die bezüglich einer Längsmittelebene 10 symmetrisch ausgebildet sind. Wiederum symmetrisch beiderseits dieser Bauelemente 9, diese jeweils zu im Querschnitt quadratischen Baugruppen 12 komplettierend, befinden sich Zwischenelemente 11, die mit den Bauelementen 9 in Verbindung stehen. Die Baugruppen 12 stehen wiederum über Seitenflächen 2 miteinander in einer Klebeverbindung und bilden ein Wandelement.

Die Baugruppen 12 sind wie bei dem in Fig. 1 gezeigten Ausführungsbeispiel derart relativ zueinander angeordnet, daß ein Teil der U-förmigen Ausnehmungen 3 zur Vorderseite 4 und ein anderer Teil zur Rückseite 5 hin orientiert ist.

Die zur Vorderseite 4 hin orientierten Ausnehmungen 3 werden wiederum durch im Querschnitt zylindrisch profilierte Platten 6 dichtend abgeschlossen. In gleicher Weise wie bei dem in Fig. 1 gezeigten Ausführungsbeispiel bilden die Ausnehmungen 3 ein geschlossenes, das Wandelement gleichförmig durchziehendes Leitungsnetzwerk, welches der Bereitstellung eines Wärmeaustausches mit der Umgebung dient. Die Bauelemente 9 sowie die Zwischenelemente 12 bestehen jeweils aus einem anorganischen Schaumwerkstoff, hier einem Geopolymer-Schaumwerkstoff, wobei lediglich die Bauelemente 9 eine größere Dichte als die Zwischenelemente 11 aufweisen. Grundsätzlich können jedoch auch die Zwischenelemente 11 eine größere Dichte als die Bauelemente 9 aufweisen. In jedem Fall steht das, in den Ausnehmungen 3 strömende Wärmeträgermedium lediglich über die Platten 6, 7 in einem Wärmeaustausch mit der Umgebung, nicht hingegen über die übrigen Strukturelemente der Bauelemente 9 bzw. der Zwischenteile 11. Die Bauelemente 9 und die Zwischenelemente 11 sind wiederum stofflich homogen miteinander verklebt, so daß sich in gleicher Weise bei dem in Fig. 1 gezeigten Ausführungsbeispiel ein werkstofflich völlig homogenes Wand- oder auch Dachelement ergibt.

Das durch die Ausnehmungen 3 gebildete Leitungsnetzwerk, innerhalb welchem ein Wärmeträgermedium strömt, kann in vielfältiger Weise genutzt werden. So können die außenliegenden Ausnehmungen 3 zur Solarenergieaufnahme dienen und die aufgenommene Wärme in einer Wärmepumpenanlage, zur Warmwasserbereitung oder auch zu Heizzwecken benutzt werden. Die innenliegenden Ausnehmungen 3 wiederum können zur Beheizung von Räumen, jedoch auch zur Kühlung benutzt werden, wobei über die innenliegenden Platten 7 eventuell aufgenommene Wärme über das Wärmeträgermedium 3 abgeführt und über die außenliegenden Ausnehmungen 3 der Umgebung zugeführt wird. Eine weitere Nutzung besteht darin, daß die Ausnehmungen 3, in Verbindung mit Einströmöffnungen auf den Innen- und Außenseiten zur Beund Entlüftung von Räumen eines Gebäudes benutzt werden. Im Bedarfsfall kann ein Teil der Ausnehmungen 3 auch zur Aufnahme baustatisch wirksamer Massen, z.B. Beton, gegebenenfalls auch in armierter Form benutzt werden, falls eine erhöhte statische Belastbarkeit des Wandelements erwünscht ist.

## Patentansprüche

1. Wandelement für den Hochbau, bestehend aus stabförmigen, seitlich aneinandergesetzten, aus anorganischen Schaumwerkstoffen bestehenden Bauelementen (1,9), wobei wenigstens ein Teil der Bauelemente (1,9) zur Außenseite hin offene Querschnittsprofile aufweist, dadurch gekennzeichnet,
- daß die Querschnittsprofile außenseitig durch Platten (6,7) dichtend verschlossen sind,
- daß die Platten (6,7) aus einem Werkstoff von hoher Wärmeleitfähigkeit bestehen,
- daß der eine Teil der Querschnittsprofile zur Vorderseite (4), der andere Teil der Querschnittsprofile zur Rückseite (5) hin orientiert ist und
- daß die Querschnittsprofile wenigstens ein Leitungsnetzwerk für ein flüssiges oder gasförmiges Medium bilden.

2. Wandelement nach Anspruch 1, dadurch gekennzeichnet,
- daß die Bauelemente (1,9) aus einem Geopolymer-Schaumwerkstoff bestehen und über ihre Seitenflächen (2) stofflich homogen miteinander verklebt sind.

3. Wandelement nach Anspruch 1 oder 2, dadurch gekennzeichnet,
- daß die Bauelemente (1) eine rechteckige oder eine quadratische Außenkontur aufweisen.

4. Wandelement nach Anspruch 1 oder 2, dadurch gekennzeichnet,
- daß die Bauelemente (9) eine dreieckige oder eine trapezförmige Außenkontur aufweisen.

5. Wandelement nach Anspruch 4, dadurch gekennzeichnet,
- daß die Bauelemente (9) mit stabförmigen Zwischenelementen (11), die seitlich angesetzt sind, in der Außenkontur rechteckige oder quadratische Baugruppen (12) bilden und
- daß die Zwischenelemente (11) werkstoffgleich mit den Bauelementen (9) ausgebildet sind.

6. Wandelement nach Anspruch 5, dadurch gekennzeichnet,
- daß die Bauelemente (9) und die Zwischenelemente (11) eine unterschiedliche Dichte aufweisen.

7. Wandelement nach einem der Ansprüche 1 bis 6, dadurch gekennzeichnet,
- daß jedem Querschnittsprofil individuelle, sich wenigstens über einen Teil der Länge der Bauelemente (1,9) erstreckende Platten (6,7) zugeordnet sind.

8. Wandelement nach einem der vorangegangenen Ansprüche 1 bis 6, dadurch gekennzeichnet,
- daß die Platten jeweils mehrere Querschnittsprofile überdecken.

9. Wandelement nach einem der vorangegangenen Ansprüche 1 bis 8, dadurch gekennzeichnet,
- daß die Platten (6,7) profiliert, insbesondere teilweise sphärisch oder zylinderisch ausgestaltet sind.

10. Wandelement nach einem der vorangegangenen Ansprüche 1, 2, 4 oder 6 bis 9, dadurch gekennzeichnet,
- daß die Bauelemente zwecks Bildung eines im Querschnitt gekrümmten Wandelements bestimmt und ausgestaltet sind.

11. Wandelement nach einem der vorangegangenen Ansprüche 1 bis 10, gekennzeichnet durch eine Verwendung insbesondere im Rahmen von Außenwandungen und Dächern.
